Europäisches Patentamt

European Patent Office

Office européen des brevets

(19)

(11) Publication number: **0 019 316**
A1

(12) # EUROPEAN PATENT APPLICATION

(21) Application number: 80200377.2

(22) Date of filing: 25.04.80

(51) Int. Cl.³: **B 29 C 27/02**
**B 29 C 17/03**

(30) Priority: 03.05.79 CH 4146/79

(43) Date of publication of application:
26.11.80 Bulletin 80/24

(84) Designated Contracting States:
DE FR GB IT NL SE

(71) Applicant: **Tetra Pak Développement SA**
**70, Avenue C.-F. Ramuz**
**CH-1003 Pully-Lausanne(CH)**

(72) Inventor: **Hoj, Peter Petersen**
**Vildrosevej 15**
**D-3060 Espergärde(DK)**

(72) Inventor: **Nilsson, Erling Ingvar**
**Trastvägen 2**
**S-230 47 Akarp(SE)**

(74) Representative: **Sevrell, Gösta**
**Tetra Pak International AB Patent Department Box 1701**
**S-22101 Lund 1(SE)**

(54) **A method for the manufacture of containers by deep drawing of hollow parts from blanks of amorphous polyester material.**

(57) A method for producing a container by welding two deep drawn parts (3,6) of polyester material together along sealing flanges (5,7) belonging to each of the deep drawn parts. Said sealing flanges being held by tools (2) during the deep drawing operation so that the flanges (5,7) will retain their amorphous character, while the rest of the material is deep drawn during a simultaneous molecular orientation and crystal formation of the material.

Fig. 1

Fig. 3

EP 0 019 316 A1

Croydon Printing Company Ltd.

# A METHOD FOR THE MANUFACTURE OF CONTAINERS BY DEEP DRAWING OF HOLLOW PARTS FROM BLANKS OF AMORPHOUS POLYESTER MATERIAL

The present invention relates to a method for the manufacture of containers by deep drawing of hollow parts from blanks of amorphous polyester material or laminate comprising layers of amorphous polyester material, and joining together of the said deep drawn hollow parts by welding or heat-sealing along adjoining flanges of the hollow parts.

In the manufacture of containers for liquid, in particular pressurized contents such as beer, refreshing beverages, etc., it is known that containers can be formed from two deep-drawn hollow parts, each of which has an annular flange arranged at the opening of the hollow part. The two hollow parts, which are to form the container, are joined together along the said flanges placed together, which are then welded to each other by surface fusion. These known containers preferably consist of dished halves, one container half having a filling and emptying opening, which can be provided with an appropriate cap, and the opposite half being surrounded by a rigid casing which has the dual function of absorbing on the one hand the pressure exerted by the contents onto the part of the half form or hollow part which is in contact with the casing, and acting on the other hand as a supporting surface for the container.

The plastic material used up to now for containers of the abovementioned type has been polyvinyl chloride or the acrylonitrile material which is marketed under the name of BAREX. These plastic materials have a relatively limited capacity of absorbing tensile stresses, so that on the one hand the material was made relatively thick and on the other hand, as mentioned above, was supported by the outer casing. It is known that polyester material which is oriented has very good tensile strength characteristics, so that the material is very suitable, e.g. for containers holding pressurized contents. It is known that bottles can be made of polyester by a blow-moulding process, the blow-moulding of the material taking place at such a temperature that a molecular orientation takes place in the material. Polyester material can be manufactured as a film by means of extrusion through a slit or annular shaped die, the extruded plane material, which is substantially amorphous, having good sealing and welding properties. Unfortunately, these sealing properties are lost when the material is molecular-oriented, since the material then crystallizes. It has proved difficult therefore first to make deep-drawn hollow parts of polyester material and subsequently join these hollow parts together, since the material crystallizes during the moulding process and has very poor welding properties.

Since the deep drawing process is much faster than the blow moulding process, containers can be made more rapidly and cheaply in that two container halves are deep-drawn and then joined together by the method described earlier. This solution has not been available up to now for polyster material, since the half formes made become crystallized and lose their welding properties in connection with the molecule-orienting stretching operation.

The abovementioned technical problem is solved in accordance with the invention in that the said blank of polyester material before the deep drawing process is clamped in a frame or clamping fixture along an area of the edge zones of the blank corresponding to the said joining flanges, whilst the parts of the blank which are situated inside the clamping frame are deep-drawn in order to form the said hollow part with simultaneous molecular orientation and crystal-formation, whereupon the hollow parts thus formed are joined together in a known manner by welding or sealing along the said joining flanges, which have substantially retained their amorphous structure.

The invention will now be described with reference to the enclosed drawing, wherein

Fig. 1 shows a cross-section of a circular blank which along its edge zone is clamped between two circular rings forming a clamping fixture of a frame,

Fig. 2 shows how the blank is stretched to form a hollow part whilst it continues to be clamped in the said fixture, and

Fig. 3 shows a cross-section of a container which is constituted of two hollow parts formed by stretching deformation, which are joined together along the annular joining flanges of the hollow parts placed together.

As mentioned previously, the polyester material obtains a substantially amorphous structure after extrusion during which the molten polyester material is pressed through a narrow slit to form a film or plate. A blank 1 of such a substantially amorphous polyester material, or a laminate containing amorphous polyester material, is clamped between two annular frames 2 along the edge zone 5 of the blank 1 so that the said edge zone 5 is held tight between the annular elements 2.

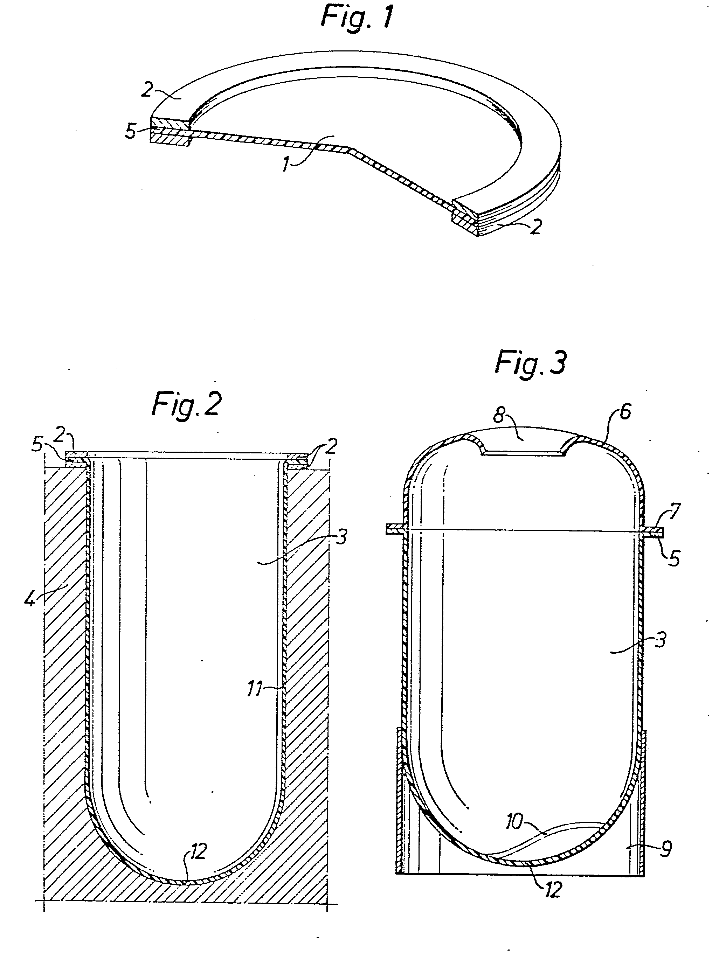

The part of the blank 1 which is situated inside the clamping frame constituted by the rings 2 is heated either after clamping or immediately before clamping, whereupon the said part of the blank 1 is stretched or drawn in accordance with Fig. 2 so as to form a cup-shaped hollow part 3.

The drawing or stretching may take place with the help of a pressure medium or vacuum, and even by means of a mechanically operating punch, and the drawing operation is carried our preferably in an outer mould 4 in such a manner that the drawn or stretched material is made to rest against the inside of the outer mould in order to be subsequently stabilized.

If the deep drawing operation is carried out at a suitable temperature, i.e. at a temperature above the softening point of the material but below its melting point, varying degrees of molecular orientation (depending on temperature) can be obtained. Owing to the molecular orientation very good tensile strength properties are imparted to the material, even if the wall of the hollow part is made very thin in conjunction with the drawing operation. Furthermore, crystal formation occurs in the material in connection with the molecular orientation, so that the initially amorphous polyester material becomes more crystalline.

The hollow part 3 so formed is detached from the mould 4 in that the rings 2 of the clamping frame are separated and the deep drawn container part 3 is removed. Since the part 5 of the blank 1 which was clamped between the rings 2 had not been subjected to any stretching operation, the polyester material in the clamping zone has retained its amorphous structure and is moreover thicker, since it has not been thinned out by any stretching.

In accordance with Fig. 3 the container part 3 so formed can be provided with a lid of amorphous polyester material or it can be combined with a similarly deep-drawn hollow part 6 which also has an annular flange 7 of amorphous polyester material. The hollow part 6 can be provided with an emptying opening 8 which in a known manner can be provided with a suitable cap.

The joined flanges 5 and 7 of amorphous polyester material belonging to the two hollow parts 3 and 6 are welded together by heating with simultaneous compression to form a tight and permanent sealing joint. It is possible to apply the heat necessary for the sealing with the help of e.g. a high-frequency electromagnetic field which is made to act upon the sealing flanges 5 and 7 and generate in the same enough heat for the sealing.

The container formed of two container halves 3 and 6 should preferably be provided with a dished end 12 in accordance with Fig. 3 but may in certain cases, if the internal pressure is not too great, be provided with bottom cavity 10 bulging inwards, which means that the container can be placed on a plane base without falling over. If it is desired to retain the dished base 12, the container may be provided with a pressed-on or glued-on annular part 9 whose purpose it is to act as a support.

The deep-drawn container halves, like the container itself, may be given different shapes and dimensions within the scope of the concept of the invention, which consists in that the centre portion of a polyester blank is subjected to a tensile deformation and molecular orientation, at the same time as an annular flange, which constitutes an integral part of the moulded hollow part, is not tension-deformed but retains its amorphous structure, and that the said annular part of amorphous polyester material is used for the joining together of the deep-drawn hollow part along another similar annular flange of amorphous polyester material which is joined to another hollow part or a lid part.

By the application of the method in accordance with the invention it is possible in a simple manner to make use of the good tensile strength properties of the molecular-oriented polyester material, at the same time as rationally moulded container parts can be joined together in an effective and durable manner.

0019316

CLAIMS

1. A method for the manufacture of containers by deep-drawing of hollow parts from blanks of amorphous polyester material or laminate comprising layers of amorphous polyester material and joining together of the said deep-drawn hollow parts by welding or heat-sealing along joining flanges of the hollow bodies, c h a r a c t e r i z e d   i n  that the said blank (1), before the deep-drawing operation, is clamped in a frame or a clamping fixture (2) along an area along the edge zone (5) of the blank corresponding to the said joining flanges, whilst the parts of the blank (1), which are situated inside the clamping frame (2), are deep-drawn to form the said hollow parts (3) with simultaneous molecular orientation and crystal formation of the material, whereupon the hollow parts (3) thus formed are provided with a lid part or are joined together with a similar hollow part (6) by welding, which is carried out by means of heating with simultaneous compression along the said joining flanges (5, 7) which consist of substantially amorphous polyester material.

2. A method in accordance with claim 1, c h a r a c t e r - i z e d   i n  that the joining flanges (5, 7) are annular.

3. A method in accordance with claim 1, c h a r a c t e r - i z e d   i n  that the deep-drawing is carried out at a temperature which is lower than the melting point of the polyester material, the part (5) of the blank which is clamped in the said frame or clamping fixture (2) not being subjected to any stretching which causes crystal formation in the material.

1/1

Fig. 1

Fig. 2

Fig. 3

001931

European Patent Office

EUROPEAN SEARCH REPORT

Application number

EP 80 20 0377.2

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | <u>GB - A - 1 130 412</u> (A.R. RAUSING) <br> * page 1, lines 60 to 81; page 2, lines 98 to 112; page 4, lines 9 to 24 and 46 to 58; fig. 1 to 4 * <br> & DE - B - 1 604 702 <br> & FR - A - 1 507 206 <br> --- | | B 29 C 27/02 <br> B 29 C 17/03 |
| A | <u>CH - A - 497 966</u> (ALGEMENE KUNST-ZIJDE UNIE N.V.) <br> * column 2, line 28 to column 3, line 11; column 3, line 61 to column 4, line 12 * <br> & DE - A - 1 779 640 <br> -- | | TECHNICAL FIELDS SEARCHED (Int.Cl.3) <br><br> B 29 C 17/03 <br> B 29 C 27/02 <br> B 29 C 27/04 |
| A | <u>FR - A - 1 478 293</u> (ILLINOIS TOOL WORKS INC.) <br> * page 2, lines 33 to 53; fig. 1 to 3 * <br> ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Date of completion of the search | Examiner | |
| Berlin | 14-08-1980 | BRUCK | |

EPO Form 1503.1 06.78